Europäisches Patentamt

European Patent Office

Office européen des brevets

(19)

(11) **EP 1 138 165 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(51) Int Cl.⁷: **H04Q 7/26**, H04B 7/26

(21) Anmeldenummer: **99966824.7**

(22) Anmeldetag: **01.12.1999**

(86) Internationale Anmeldenummer:
**PCT/DE1999/003839**

(87) Internationale Veröffentlichungsnummer:
**WO 2000/035217 (15.06.2000 Gazette 2000/24)**

(54) **VORRICHTUNG UND VERFAHREN ZUR SCHNURLOSEN ÜBERTRAGUNG VON TELEFONGESPRÄCHEN ÜBER MEHRERE BASISSTATIONEN AN DECT MOBILTELEFONE**

DEVICE AND METHOD FOR THE RADIO TRANSMISSION OF TELEPHONE CALLS VIA SEVERAL BASE STATIONS TO DECT MOBILE PHONES

DISPOSITIF ET PROCEDE DE RADIOTRANSMISSION DE CONVERSATIONS TELEPHONIQUES A DES TELEPHONES MOBILES DECT VIA PLUSIEURS STATIONS DE BASE

(84) Benannte Vertragsstaaten:
**DE FR GB**

(30) Priorität: **09.12.1998 DE 19856813**

(43) Veröffentlichungstag der Anmeldung:
**04.10.2001 Patentblatt 2001/40**

(73) Patentinhaber: **Infineon Technologies AG 81669 München (DE)**

(72) Erfinder: **KRAMER, Ronalf D-81247 München (DE)**

(74) Vertreter: **Barth, Stephan Manuel, Dr. Reinhard-Skuhra-Weise & Partner Gbr, Patentanwälte Friedrichstrasse 31 80801 München (DE)**

(56) Entgegenhaltungen:
**EP-A- 0 780 999      EP-A- 0 802 693 WO-A-96/21330**

**Beschreibung**

Die vorliegende Erfindung betrifft eine Vorrichtung und ein Verfahren zur schnurlosen Übertragung von Telefongesprächen über mehrere, räumlich getrennte Basisstationen an Mobiltelefone im DECT-Standard.

Die EP 0 802 693 A2 offenbart ein Verfahren zum Anschluss von Basisstationen funkbetriebener Mobilteile nach dem DECT-Standard an ISDN-Nebenstellenanlagen, wobei den Mobilteilen sämtliche Leistungsmerkmale der Nebenstellenanlage uneingeschränkt zur Verfügung stehen.

Dabei sind die DECT-spezifischen Anteile des Systems in den Basisstationen integriert und die Basisstationen über zwei digitale Schnittstellen, die je über n B-Kanäle und n D-Kanale verfügen, an die Nebenstellenanlage geschaltet.

Die Basisstationen aus der Nebenstellenanlage werden über einen der D- oder B-Kanäle synchronisiert, und über den zweiten der D- oder B-Kanäle wird das logische Protokoll zwischen Nebenstellenanlage und Basisstationen ausgetauscht.

Die vorliegende Erfindung bezweckt das DECT-Verfahren nicht nur auf die klassische Anwendung des schnurlosen Telefons zu beschränken, sondern zur Realisierung der drahtlosen Erweiterung einer Telefon-Ubertragungsstrecke zu verwenden ("last mile"-Konzept), oder - noch allgemeiner - auf ein zellulares Mobiltelefon-System anzuwenden.

Der Nachteil der gegenüber GSM geringen Reichweite von DECT wird ausgeglichen durch die niedrigere Sendeleistung und daher längere standby-Zeit der Mobilteile und die einfachere und daher kostengünstigere Ausführung der Basisstationen. Außerdem benutzt man als Verbindung zwischen Vermittlung und Basisstation die schon vorhandenen Telefonleitungen. Auch die Linecards in der Vermittlung sind voll Hardware-kompatibel zu ISDN-Linecards, so daß ein großer Teil der vorhandenen Infrastruktur genutzt werden kann.

Bei "Wireless local loop" Systemen (WLL) - off auch als "Radio in the loop" Systeme (RITL) bezeichnet - bestehen die Verbindungen zwischen Teilnehmer und Vermittlung (LT) sowohl aus einem Punkt zu Multipunkt Funkstreckenteil zwischen den Radio Base Stations (BS) und den Mobilteilen als auch aus einem drahtgebundenen Teil zwischen LT und BS und werden vorteilhaft im ISDN-Standard betrieben, aus Gründen der Reichweite als U-Schnittstelle.

Üblicherweise wird für den Funkteil der DECT-Standard verwendet und die Datenkompression/Dekompression (ADPCM) bereits im LT durchgeführt. Dann lassen sich über die beiden B-Kanäle der U-Schnittstelle sehr effektiv vier DECT-Kanäle übertragen.

Bei "Cellular wireless" Systemen (CWS) ist jeder BS eine Funkzelle zugeordnet. Der Teilnehmer benutzt ein mobiles Telefon, z.B. nach DECT-Standard, mit dem er über das LT alle anderen Teilnehmer innerhalb des Zellengebietes erreichen kann und natürlich Zugang zum gesamten Vermittlungssystem hat. Die Funkzellen können in einem lokalen Bereich liegen (wireless PBX, z.B. in einem Firmengelände) oder auch das Gebiet einer ganzen Stadt überdecken, so daß hierin mobiles Telefonieren möglich ist.

Für einen störungsfreien Übergang des mobilen Teilnehmers zwischen benachbarten Funkzellen (roaming) schreibt ETSI (ETS 300 175-2) einen maximalen zeitlichen Versatz der DECT-Senderahmen zweier beliebiger BS zueinander von ± 2.0,µs vor. Schon durch die um ca. 5 µs je Kilometer Leitung steigende Signallaufzeit kann dies bei beliebiger Leitungslänge ohne zusätzliche Maßnahmen nicht eingehalten werden. Die Einhaltung dieser Zeittoleranz wird daher durch folgende Maßnahmen erreicht:

- Die unterschiedlichen Laufzeiten auf den U-Schnittstellen (durch Leitungslänge, -Querschnitt und Temperatur) müssen gemessen, an die BS übermittelt und dort ausgeglichen werden(Laufzeitkompensation).

- Da das LT die Zeitreferenz und den Taktmaster darstellt, erfolgt von hier die Synchronisation aller BS über die U-Schnittstellen.

- Die internen Laufzeiten der Daten durch LT und BS sind entweder für alle Kanäle konstant, oder gehen in die Laufzeitkompensation mit ein, d.h. sie müssen gemessen werden können.

- Die Verzögerungen bei der Erzeugung und Auswertung der Synchronisationssignale sind für alle Kanäle gleich.

- Falls der EOC-Kanal (embedded operational channel im Superrahmen von U) zur Übermittlung des Synchronisationssignales zur BS verwendet wird, müssen alle Superrahmen auf U im LT zueinander synchronisiert werden.

- Der Jitter des BS-Sendesignales, verursacht durch Jitter im Vermittlungsreferenztakt, in der LT und in der BS, ist hinreichend klein, da sein Maximalwert in die Gesamttoleranz mit eingeht.

Wenn sich ein solches zellulares Mobiltelefonnetz über eine größere Fläche erstrecken soll, ist es erforderlich, die Basisstationen von verschiedenen Vermittlungsstellen (LT) aus zu betreiben. Um trotzdem den nahtlosen Übergang von Mobilteilnehmern zwischen Funkzellen zu ermöglichen, die über Basisstationen (BS) versorgt werden, die an unterschiedlichen Vermittlungsstelen (LT) angeschlossen sind, muß die Synchronisation aller Vermittlungsstellen (LT, line termination), auch solcher, die an verschiedenen Orten stehen, so gewährleistet sein, daß bei Verwendung räumlich getrennter Basisstationen (BS) diese in ihrer Zeitlage zueinander synchron sind. Mit Hilfe dieser Synchronität ist dann ein Intercell handover möglich, so daß ein schnurloses, räumlich großes Vermittlungssystem aufgebaut werden kann, auf Basis von ISDN im leitungsgebundenen Teil.

Im Stand der Technik gab es bisher nur Lösung der sehr aufwendigen Synchronisierung der an verschiedenen Orten befindlichen Systeme durch das weltweite Satellitennavigationssytem GPS.

Es ist daher Aufgabe der vorliegenden Erfindung, eine Vorrichtung und ein Verfahren zur schnurlosen Übertragung von Telefongesprächen über mehrere, räumlich getrennte Basisstationen an Mobiltelefone im DECT-Standard zu schaffen, bei dem die Basisstationen auch an verschiedenen, räumlich getrennten Vermittlungsstellen angeschlossen sein können. Nur so läßt sich nämlich ein wirklich großflächiges zellulares Mobiltelefonnetz im DECT-Standard errichten und betreiben.

Erfindungsgemäß wird diese Aufgabe dadurch gelöst, daß die räumlich getrennten Basisstationen über verschiedene, ebenfalls räumlich getrennte Vermittlungsstellen mit dem Telefonnetz verbunden sind und eine weitere Leitung zwischen den Vermittlungsstellen zur Messung der Laufzeit zwischen den Vermittlungsstellen und zur Synchronisation geschaltet ist.

Vorzugsweise handelt es sich dabei um eine ISDN-U-Leitung.

Weiter wird erfindungsgemäß ein Verfahren angegeben, bei dem während der Telefongespräche die Übertragung über mehrere räumlich getrennte Basisstationen erfolgen kann, die über verschiedene, ebenfalls räumlich getrennte Vermittlungsstellen mit dem Telefonnetz verbunden sind, wobei die erforderliche Synchronisation durch eine zusätzliche Leitung zwischen den Vermittlungsstellen zur Messung der Laufzeit zwischen den Vermittlungsstellen erfolgt. Auch hier handelt es sich bei der zusätzlichen Leitung vorzugsweise um eine ISDN-U-Leitung.

Die Erfindung wird im folgenden anhand des in den beigefügten Zeichnungen dargestellten Ausführungsbeispiels erläutert. Es zeigen:

**Fig. 1** ein Prinzipschaltbild eines Mobiltelefon-Vermittlungssystems;

**Fig. 2** die erfindungsgemäß zusätzlich einzufügende Leitung;

**Fig. 3** den erfindungsgemäßen Aufbau einer entsprechenden Vermittlungsstelle im Detail,

**Fig. 4** die Propagierung des Taktes und die Richtung der Synchronisation in dem schematisch dargestellten Mobilfunksystem, und

**Fig. 5** aus entsprechendes Zeitablaufdiagramm.

Die Vermittlungen (=Taktmaster) LT sind über die U-Schnittstellen mit Basissendestationen BS verbunden, die über Funk wiederum mit den DECT-Endgeräten 10, 11 verbunden sind. Eine Vermittlungsanlage erhält ein zentrales Synchronisationssignal und schickt die Daten auf allen U-Leitungen hierzu synchron ab, verzögert um eine feste Laufzeit $\tau_{LT}$ zum Synchronisationssignal. Auf U gilt der übliche ISDN-Standard. Da alle Leitungen zwischen LT und BS im Allgemeinen unterschiedliche Parameter haben (Länge, Querschnitt, Temperatur etc.) sind deren Laufzeiten $\tau_L$ individuell, so daß die zunächst vom LT synchron abgeschickten Daten an den BS nicht mehr synchron zueinander sind. Sie werden daher auf der Basisstation wieder synchronisiert, indem die Laufzeiten $\tau_L$ vom LT gemessen, an die BS übertragen und von der BS mit einem zusätzlichen Wert $\tau_{BS}$ beaufschlagt werden, so daß für alle n Leistungen gilt: $\tau_{LT_1} + \tau_{L_n} + \tau_{BS_n} \approx const \forall n$.

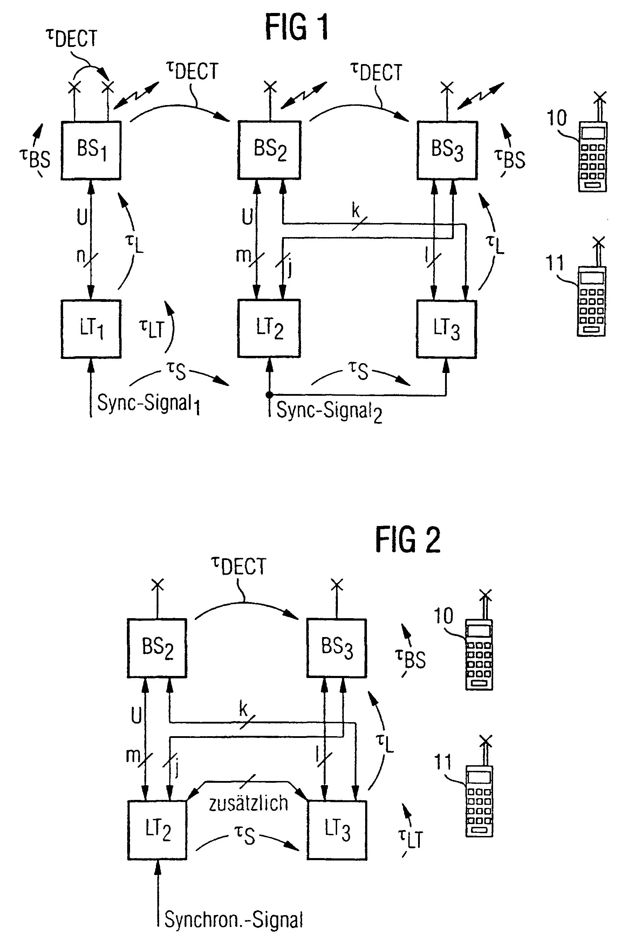

Dieses Verfahren ist bekannt als "Laufzeitkompensation fur DECT link" und funktioniert bereits (z.B. implementiert mit den Siemens-Bausteinen DFEQ (PEB 24911) und IECQ (PEB 2091) und MBMC (PMB 2727)). In Fig. 1 ist LT: und $BS_1$ mit den n Leitungen ein eigenständiges System. BS: ist hier mit 2 Antennen gezeichnet, um zu verdeutlichen, daß nach der Laufzeitkompensation die verbleibende Zeitdifferenz $\tau_{DECT}$ (= Zeitdifferenz zwischen den Zellen) ideal zu 0 kompensiert werden kann. Real hat die Summe $\tau_{LT_1} + \tau_{L_n} + \tau_{BS_n}$ eine Toleranz, so daß $\tau_{DECT} \neq 0$ ist, z. B. dadurch, daß die $\tau_L$ nicht beliebig genau bekannt sind. Ein handover zwischen den Zellen eines DECT-Systems ist möglich, sofern $-2\mu s < \tau_{DECT} < +2\mu s$. Dies kann mit einem System $LT_1$, $BS_n$ ohne Probleme erreicht werden.

Betrachtet man jedoch ein System aus $LT_1$, $LT_2$, $BS_1$ und $BS_2$ mit räumlich getrennten LT (und BS) so kann man im Allgemeinen $\tau_{DECT}$ zwischen $BS_1$ und $BS_2$ nicht unter $\pm 2\mu s$ bringen, da die Sync-Signale 1 und 2 der $LT_1$ und $LT_2$ einen beliebigen Zeitversatz $\tau_S$ zueinander haben, der additiv voll in $\tau_{DECT}$ eingeht. Entweder muß also $\tau_S$ bekannt

sein oder es müssen die Synchr.-Signale zueinander synchron sein:

- $\tau_S$ bekannt; Verfahren hierzu $\rightarrow$ Gegenstand der vorliegenden Erfindung.

- Sync-Signale zueinander synchron $\rightarrow$ wird mittels GPS-System erreicht (aufwendig).

Erfindungsgemäß wird mit Hilfe eines im Prinzip zur Messung von $\tau_L$ gleichen Verfahrens auch das $\tau_S$ gemessen, so daß alle Laufzeiten im System $LT_2$, $LT_3$, $BS_2$, $BS_3$ zueinander in den $BS_2$ und $BS_3$ synchronisiert ("kompensiert") werden können und daher ein Intercell handover (=Wechsel des mobilen Teilnehmers zwischen verschiedenen Funkzellen) zwischen Zellen von $BS_2$ und solchen von $BS_3$ problemlos möglich wird. Das Gesamtsystem hat ein gemeinsames Synchronisationssignal und zwischen $LT_2$ und $LT_3$ wird eine zusätzliche U-Leitung geschaltet, wie in Fig. 2 dargestellt.

Der große Vorteil der Erfindung ist der geringe Aufwand (es ist nur ein 1-Kanal-NT im $LT_3$ notwendig) und es kann das gleiche bereits im System $LT_1$, $BS_1$ angewendete Verfahren zur Laufzeitmessung benutzt werden.

$LT_2$ mißt neben den Laufzeiten $\tau_L$ der Leitungen m und j auch die Laufzeit $\tau_S$ der Leitung zum $LT_3$. Diese Laufzeitinfo $\tau_S$ wird (wie bei der Übermittlung von $LT \rightarrow BS$) zum $LT_3$ übertragen. Die NT-Seite im $LT_3$ ist somit identisch zur NT-Empfangsseite in den BS.

Im System sind dann alle Laufzeiten bekannt, so daß eine Kompensation durchgeführt werden kann, bei der gilt (z.B. bei den Leitungen m und k):

$$\tau_{L_m} + \tau_{LT2} + \tau_{BS2_m} = \tau_{LT_2} + \tau_{L_k} + \tau_S + \tau_{NT} + \tau_{LT3} + \tau_{BS3_k}$$

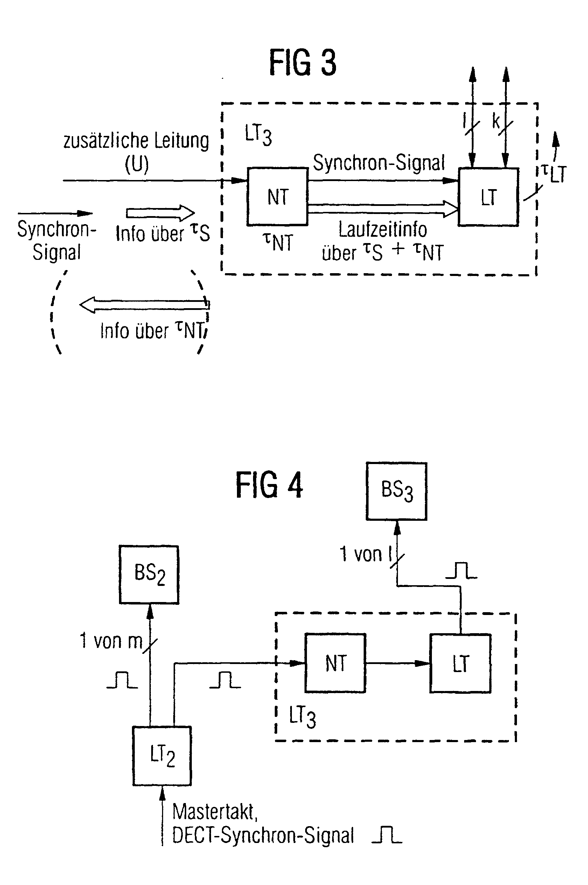

Die Synchronisation von $LT_3$ und somit von $BS_3$ erfolgt, indem die Synchronisation von $LT_2$ nach $LT_3$ über die zusätzliche Leitung geschickt wird. Der Laufzeitunterschied zwischen der Synchronisation von $LT_2$ und $LT_3$ ist aber gerade $\tau_S + \tau_{NT}$ und schon in der Kompensation mit berücksichtigt, so daß $\tau_{DECT}$ zwischen allen "Antennen" von $BS_2$ und $BS_3$ auf ideal 0, real unter $\pm$ 2µs reduziert werden kann. Nach der Synchronisation wird der Jitter des einzigen "Master-Sync-Signales" zum $LT_2$ über die zusätzliche U-Leitung mitübertragen (diese Leitung ist daher daueraktiv), und geht daher in alle BS gleich mit ein (sofern die Jitterfrequenz $<< \frac{1}{\tau_S}$) und beeinflußt somit nicht $\tau_{DECT}$. Zur Verdeutlichung ist in Fig. 3 nochmals gezeigt, wie die Synchronisation und die Propagierung des Taktes erfolgt.

In Fig. 4 ist nochmals das Prinzip der Propagierung des Taktes und die Richtung der Synchronisation an einem ganz einfachen schematisch dargestellten Mobilfunksystem gezeigt. Wie in Fig. 4 dargestellt, besteht dieses Mobilfunksystem aus einer Vermittlungsstelle $LT_2$, die mit dem Mastertakt und damit dem DECT Synchronsignal gespeist wird. An der Vermittlungsstelle $LT_2$ ist über die Leitungen m direkt eine Basisstation $BS_2$ angeschlossen. Weiter ist die Vermittlungsstelle $LT_1$ über eine ISDN-U-Leitung mit einer weiteren Vermittlungsstelle $LT_3$ verbunden, die über die Leitungen 1 mit einer weiteren Basisstation $BS_3$ verbunden ist.

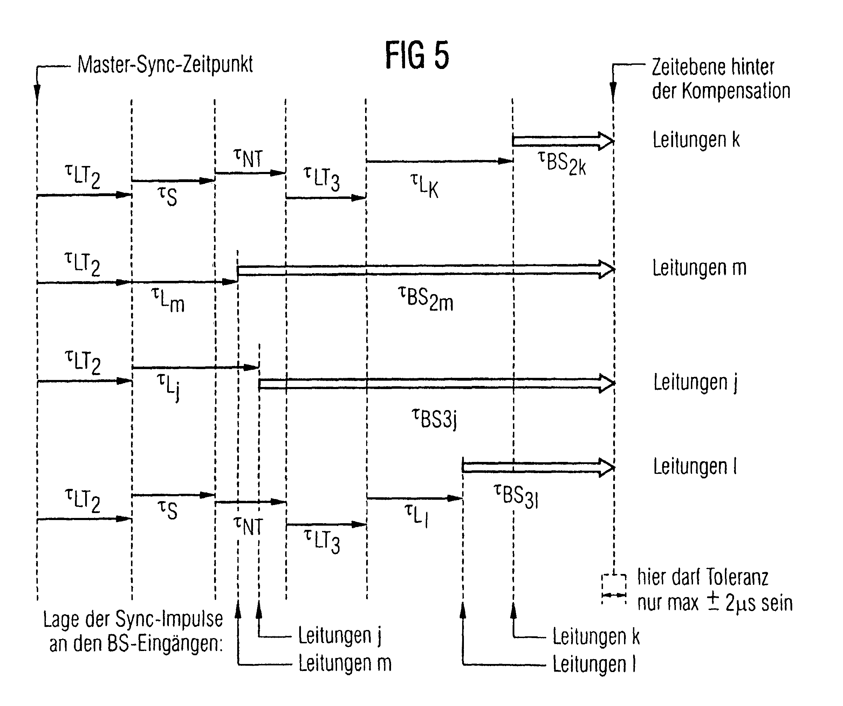

Weiterhin ist in Fig. 5 der entsprechende Zeitablauf angegeben, wobei hier auch die Leitungen k und j aus dem rechten Teil der Fig. 1 angegeben sind. Es wird dabei angenommen, daß die Basisstation BS2 über die Leitungen k mit der Vermittlungsstelle LT3 verbunden ist, und umgekehrt die Vermittlungsstelle LT2 über die Leitungen j mit der Basisstation BS3 verbunden ist. Die gesamten Zeitverzögerungen bis zum Senden ergeben sich damit ausgehend vcn dem Mastersync-Zeitpunkt, der jeweils auf der linken Seite den gemeinsamen Beginn der Zeitachsen bezeichnet, beispielsweise für die oben gezeichnete Leitung m einfach als Zeitverzögerungung in der Vermittlungsstelle $LT_2$ ($\tau_{LT2}$) plus Zeitverzögerungen über die Leitungen m ($\tau_{Lm}$). Um nun eine synchrone Abstrahlung der Signale durch die Basisstationen zu erzielen, muß eine entsprechende zusätzliche Zeitverzögerung $\tau_{BSm}$ eingeführt werden, so daß die Absendung des Signals soweit verzögert wird, daß auch von anderen Stationen mit längeren Laufzeiten eine gleichzeitige Absendung der Signale realisiert werden kann. Hierzu sind beispielsweise die Leitungen 1 zu betrachten, bei denen das Signal von $LT_2$ über die Verbindungsleitung zu $LT_3$ und dann zur Basisstation $BS_3$ geführt ist. Hierbei treten folgende Zeitverzögerungen auf: $\tau_{LT_2}$ in der Vermittlungsstelle $LT_2$, $\tau_S$ bei der Übertragung über die Leitung zwischen der Vermittlungsstelle $LT_2$ und der Vermittlungsstelle $LT_3$, $\tau_{NT}$ und $\tau_{LT3}$ in der Vermittlungsstelle $LT_3$, $\tau_{L_i}$ auf dem Leitungsweg zwischen der Vermittlungsstelle $LT_3$ und der Basisstation $BS_3$. Somit muß nun noch eine Zeitverzögerung $\tau_{BS3l}$ hinzugefügt werden, um den gleichzeitigen Absendezeitpunkt zu erreichen. Diese zusatzlich hinzugefugten Zeitverzogerungen sind immer als Doppelpfeile auf der Zeitachse dargestellt. Gleiches gilt für die ebenfalls dargestellten Signalwege über die Leitungen k und j der Fig. 1.

**Patentansprüche**

1. Vorrichtung zur schnurlosen Übertragung von Telefongesprächen oder anderen ISDN-B-Kanal-Daten über mehrere, räumlich getrennte Basisstationen (BS) an Mobiltelefone im DECT-Standard, **dadurch gekennzeichnet, daß** die räumlich getrennten Basisstationen (BS) auch über verschiedene ebenfalls räumlich getrennte Vermittlungsstellen (LT) mit dem Telefonnetz verbunden sein können, wobei dann eine weitere Leitung zwischen den Vermittlungsstellen (LT) zur Messung der Laufzeit zwischen den Vermittlungsstellen und zur Synchronisation geschaltet ist.

2. Vorrichtung nach Anspruch 1, **dadurch gekennzeichnet, daß** es sich bei der weiteren Leitung um eine ISDN-U-Leitung handelt.

3. Verfahren zur schnurlosen Übertragung von Telefongesprächen über mehrere, räumlich getrennte Basisstationen (BS) an Mobiltelefone im DECT-Standard, **dadurch gekennzeichnet, daß** während der Telefongespräche die Übertragung über mehrere räumlich getrennte Basisstationen erfolgen kann, die über verschiedene ebenfalls räumlich getrennte Vermittlungsstellen (LT) mit dem Telefonnetz verbunden sind, und die erforderliche Synchronisation durch eine zusätzliche Leitung zwischen den Vermittlungsstellen (LT) zur Messung der Laufzeit zwischen den Vermittlungsstellen (LT) erfolgt.

4. Verfahren nach Anspruch 3, **dadurch gekennzeichnet, daß** als zusätzliche Leitung eine ISDN-U-Leitung verwendet wird.

**Claims**

1. Device for the cordless transmission of telephone calls or other ISDN B-channel data via a number of spatially separate base stations (BS) to mobile telephones in the DECT standard, **characterized in that** the spatially separate base stations (BS) can also be connected to the telephone network via different line terminations (LT) which are also spatially separate, in which arrangement a further line is then connected between the line terminations (LT) for measuring the delay between the line terminations and for synchronization.

2. Device according to Claim 1, **characterized in that** the further line is an ISDN U line.

3. Method for the cordless transmission of telephone calls via a number of spatially separate base stations (BS) to mobile telephones in the DECT standard, **characterized in that** during the telephone calls, the transmission can take place via a number of spatially separate base stations which are connected to the telephone network via different line terminations (LT) which are also spatially separate, and the required synchronization takes place via an additional line between the line terminations (LT) for measuring the delay between the line terminations (LT).

4. Method according to Claim 3, **characterized in that** an ISDN U line is used as an additional line.

**Revendications**

1. Dispositif pour la transmission sans fil de conversations téléphoniques ou d'autres données de canal RNIS B par l'intermédiaire de plusieurs stations de base (BS), séparées dans l'espace, à des téléphones mobiles dans le standard DECT, **caractérisé en ce que** les stations de base (BS) séparées dans l'espace peuvent aussi être reliées au réseau téléphonique par l'intermédiaire de différents centres de commutation (LT) également séparés dans l'espace, une autre ligne étant alors branchée entre les centres de commutation (LT) pour la mesure du temps de propagation entre les centres de commutation et pour la synchronisation.

2. Dispositif selon la revendication 1, **caractérisé en ce que** l'autre ligne est une ligne RNIS U.

3. Procédé pour la transmission sans fil de conversations téléphoniques par l'intermédiaire de plusieurs stations de base (BS), séparées dans l'espace à des téléphones mobiles dans le standard DECT. **caractérisé en ce que**, pendant les conversations téléphoniques, la transmission peut s'effectuer par l'intermédiaire de plusieurs stations de base séparées dans l'espace et reliées au réseau téléphonique par l'intermédiaire de différents centres de commutation (LT) également séparés dans l'espace et **en ce que** la synchronisation nécessaire est effectuée par une ligne supplémentaire entre les centres de commutation (LT) pour la mesure du temps de propagation entre les centres de commutation (LT).

4.  Procédé selon la revendication 3, **caractérisé en ce qu'**on utilise comme ligne supplémentaire une ligne RNIS U.

# FIG 1

# FIG 2

## FIG 3

## FIG 4

FIG 5

Master-Sync-Zeitpunkt

Zeitebene hinter der Kompensation

$\tau_{LT2}$ $\tau_{S}$ $\tau_{NT}$ $\tau_{LT3}$ $\tau_{LK}$ $\tau_{BS2k}$ — Leitungen k

$\tau_{LT2}$ $\tau_{Lm}$ $\tau_{BS2m}$ — Leitungen m

$\tau_{LT2}$ $\tau_{Lj}$ $\tau_{BS3j}$ — Leitungen j

$\tau_{LT2}$ $\tau_{S}$ $\tau_{NT}$ $\tau_{LT3}$ $\tau_{Ll}$ $\tau_{BS3l}$ — Leitungen l

Lage der Sync-Impulse an den BS-Eingängen:

Leitungen j
Leitungen m
Leitungen k
Leitungen l

hier darf Toleranz nur max $\pm 2\mu s$ sein

EP 1 138 165 B1